Europäisches Patentamt

European Patent Office

Office européen des brevets

(19)

(11) Numéro de publication: **0 140 269**
**B1**

(12) # FASCICULE DE BREVET EUROPEEN

(45) Date de publication du fascicule du brevet:
**19.11.87**

(21) Numéro de dépôt: **84112420.9**

(22) Date de dépôt: **16.10.84**

(51) Int. Cl.⁴: **H 02 G 15/068,** H 01 F 27/04,
H 01 B 17/30

(54) **Montage d'extremite pour cable electrique haute tension.**

(30) Priorité: **18.10.83 FR 8316536**

(43) Date de publication de la demande:
**08.05.85 Bulletin 85/19**

(45) Mention de la délivrance du brevet:
**19.11.87 Bulletin 87/47**

(84) Etats contractants désignés:
**BE CH DE FR GB IT LI LU NL**

(56) Documents cités:
**FR - A - 1 377 353**
**GB - A - 930 017**
**GB - A - 1 076 936**
**NL - A - 8 204 535**
**US - A - 3 517 113**

(73) Titulaire: **LES CABLES DE LYON Société anonyme dite:,
170 quai de Clichy, F-92111 Clichy Cedex (FR)**

(72) Inventeur: **Gaubert, Jean, 54, Les Echanaux, F-01390 St
Andre de Corcy (FR)**

(74) Mandataire: **Weinmiller, Jürgen et al,
Lennéstrasse 9 Postfach 24, D-8133 Feldafing (DE)**

ACTORUM AG

## Description

La présente invention concerne les montages d'extrémité prévus pour assurer l'entrée de câbles électriques haute tension, notamment de câbles secs, dans les enceintes étanches où ils aboutissent, en particulier dans les cuves de transformateurs et des caissons haute tension.

On connaît en particulier par le document GB-A-1 076 936 un montage d'extrémité assurant l'entrée d'un câble électrique haute tension dans une enceinte étanche au moyen d'un joint tronconique creux en matériau souple venant se placer entre une surépaisseur ménagée sur le câble et un orifice tronconique complémentaire d'une paroi de l'enceinte.

En effet de manière connue, l'entrée de câbles électriques haute tension dans une enceinte pose un problème particulier d'étanchéité à partir du moment où l'enceinte est remplie d'un liquide ou d'un gaz pour des raisons bien connues de bon fonctionnement aux hautes tensions électriques impliquées. Ainsi par exemple le problème se pose dans le cas d'entrée de caissons remplis de gaz tel que l'hexafluorure de soufre et dans le cas d'extrémités d'extérieur ou d'entrées de transformateurs à remplissage d'huile.

En particulier, la température des câbles varie largement avec l'intensité des courants qui les traversent et elle entraîne une variation importante de leurs diamètres, qui doit être compensée par des dispositifs d'étanchéité afin d'éviter les fuites.

Selon un état de la technique connu on met en œuvre des barrières d'étanchéité complexes qui sont indépendantes de la partie électrique et qui combinent un agencement d'étanchéité par joint assurant une étanchéité transversale par rapport au câble avec un fourreau assurant une étanchéité longitudinale, plusieurs barrières d'étanchéité étant disposées en série.

La partie électrique met classiquement en œuvre un agencement de répartition du champ électrique. Un tel agencement et un dispositif de maintien correspondant est notamment décrit dans le document US-A-3 517 113, il est toutefois mal adapté à une mise en place dans le cadre d'une enceinte étanche.

La présente invention a pour objet d'obtenir un montage d'extrémité étanche, simple et réglable, résolvant par sa composition et par sa forme les problèmes d'ordre électrique et d'étanchéité apparaissant aux entrées de câbles électriques haute tension dans une enceinte étanche possédant au moins une embouchure d'entrée de câble fermée par une plaque d'obturation fixée sur elle et percée d'un orifice tronconique de passage de câble, qui s'ouvre vers l'intérieur de l'enceinte lorsque la plaque est en place. Selon une caractéristique de l'invention la pièce d'extrémité fusiforme, qui sert notamment de joint, est traversée axialement par un conduit ménagé pour un passage en force du câble, elle vient d'enficher dans l'orifice, à la paroi interne duquel cette pièce d'extrémité s'applique par l'intermédiaire d'une trompette semi-conductrice. Le pavillon de cette trompette a même conicité que ledit orifice, qu'il vient fermer de manière étanche, l'embout de ladite trompette vient étroitement enserrer le câble à l'extérieur de l'enceinte, au delà de la plaque d'obturation lorsque le câble est en place. En dernier lieu un cône de serrage, traversé axialement par le câble et placé sur le bout de la pièce d'extrémité fusiforme qui est opposé à celui qui comporte la trompette, vient enfoncer cette pièce d'extrémité dans l'orifice par un dispositif de rappel élastique prenant appui sur la plaque d'obturation et assurant simultanément une bonne étanchéité et une bonne continuité électrique.

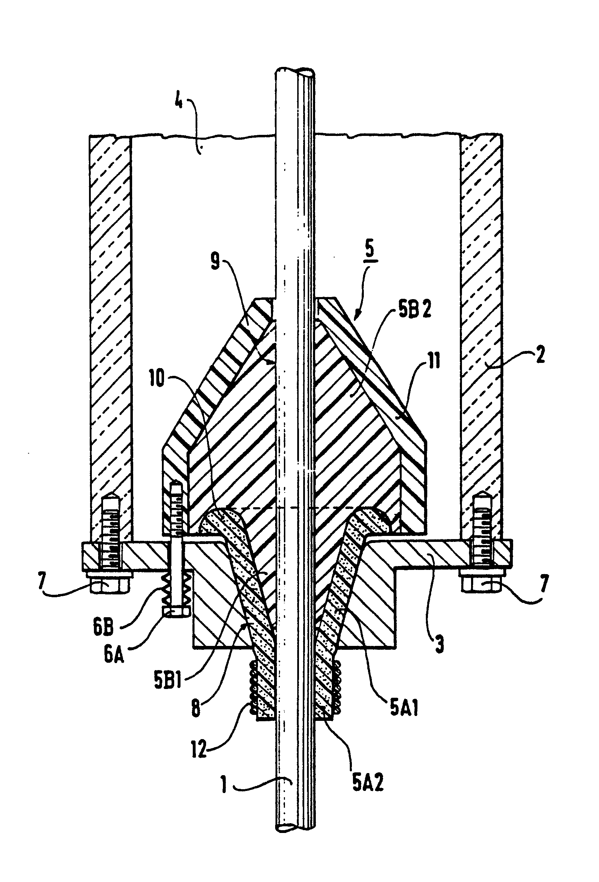

L'invention, ses caractéristiques et ses avantages sont développés dans la description qui suit en relation avec la figure unique définie ci-dessous.

Cette figure unique représente une vue en coupe d'un montage d'extrémité selon l'invention.

Comme indiqué plus haut le montage d'extrémité présenté est destiné à assurer l'entrée d'un câble électrique haute tension 1 dans une enceinte étanche dont seule a été partiellement figurées une embouchure 2 d'entrée de câble que vient fermer une plaque d'obturation 3.

Le câble électrique haute-tension est un câble isolé par exemple du type à isolant sec tel du polyéthylène, ou du type à isolant papier imprégné.

Comme indiqué plus haut l'enceinte étanche est classiquement une cuve de transformateur ou un caisson et l'embouchure 2 représentée est une entrée de transformateur ou de caisson ou encore une extrémité d'extérieur, elle est fermée de manière étanche par le montage selon l'invention de manière à éviter les fuites du fluide 4, huile ou gaz, contenu dans l'enceinte.

Le montage d'extrémité proprement dit comporte la plaque d'obturation 3, une pièce d'extrémité fusiforme 5 axialement traversée par le câble 1, un cône de serrage 11 et un dispositif de rappel élastique 6 dont un seul élément est ici figuré.

La plaque d'obturation 3 est généralement amovible, elle est fixée de manière étanche à l'extrémité de l'enveloppe extérieure de l'embouchure 2 par des moyens classiques symbolysés ici par les vis 7. Cette plaque d'obturation 3 est conductrice ou isolante suivant les besoins et elle est munie d'un orifice 8 à travers lequel passe le câble. L'orifice 8 est tronconique, préférablement aigu et il s'ouvre vers l'intérieur de l'embouchure 2 c'est-à-dite de l'enceinte, lorsque la plaque d'obturation 3 est en place.

La pièce d'extrémité fusiforme 5 est une pièce réalisée préférablement de manière monobloc à partir d'un matériau relativement élastique tel un caoutchouc éthylène-propylène-diène monomère (EPDM) dont une partie 5A appelée trompette est chargée au noir de carbone de manière à former un écran semi-conducteur. On peut en variante envisager de réalisér la trompette 5A et le corps principal 5B de la pièce d'extrémité en deux pièces intimement accolées, à partir du moment où des précautions sont prises pour éviter la formation de vacuoles dans la zone de contact entre les deux pièces et par conséquent la création de possibles défauts électriques ou d'étanchéité.

Comme indiqué plus haut la pièce d'extrémité 5 fusiforme qui se présente sous la forme d'un bicône est traversée selon son axe longitudinal par un conduit 9 dont le diamètre est choisi de manière à permettre le passage en force du câble 1 lors de son insertion dans ce conduit.

En effet une part de l'étanchéité est obtenue sous l'action de la pression appliquée par la pièce d'extrémité 5 élastiquement déformable sous forte contrainte, cette pièce étant chargée de plus d'encaisser les variations de diamètre dues aux variations de température du câble.

Comme indiqué plus haut le bicône formant la pièce d'extrémité 5 se termine par la trompette 5A semi-conductrice dans la zone destinée à venir s'enficher dans l'orifice 8 de la plaque d'obturation.

Cette trompette 5A comporte un pavillon 5A1 de forme conique qui a extérieurement même conicité que l'orifice 8, et un embout 5A2 qui est destiné à se prolonger au delà de la partie conique 5B1 du corps principal 5B que recouvre le pavillon 5A1 et à l'extérieur de la plaque d'obturation 3 et donc de l'enceinte lorsque le montage d'extrémité est en place.

Dans la forme de réalisation présentée la partie conique 5B1 du corps principal qui est recouverte par le pavillon 5A1 est prévue pour se terminer à l'intérieur de la plaque d'obturation 3 à proximité de la face externe de cette plaque lorsque le montage d'extrémité est en place.

Le pavillon 5A1 vient s'appliquer contre la paroi interne de l'orifice 8 sous l'action du dispositif de rappel élastique 6 qui sera décrit plus loin, il assure l'étanchéité requise à ce niveau. Le pavillon 5A1 a aussi un effet de déflecteur de champ et il présente en ce but un rebord arrondi 10 débordant qui vient se loger dans une rainure circulaire ménagée dans la base de la seconde partie conique 5B2 du corps principal 5B, cette seconde partie conique 5B2 ayant une base de plus grand diamètre que la partie conique 5B1 du même corps.

Pour assurer l'étanchéité de traversée, la pièce d'extrémité 5B est enfoncée dans l'orifice 8 sous la pression du cône de serrage 11 tiré vers la fase interne de la plaque d'obturation 3 par le dispositif de rappel élastique 6.

Le cône de serrage 11, qui est en matériau isolant rigide, par exemple en résine époxyde chargée de fibres de verre, est conçu de manière à permettre le passage axial du câble 1 et à épouser la forme extérieure de la partie conique 5B2 du corps principal. De ce fait il participe à la compression du câble par ce corps principal et par conséquent à l'étanchéité, lorsqu'il est tiré par le dispositif de rappel élastique 6.

Ce dispositif de rappel élastique 6 est par exemple réalisé à l'aide d'un esemble de vis, telle 6A, par exemple trois ou cinq vis également réparties dans des trous de la plaque d'obturation 3 de manière à venir se visser dans la base du cône de serrage 11. Ces vis, qui ont leurs têtes à l'extérieur de la plaque d'obturation 3 et de l'enceinte lorsque la plaque est en place, prennent appui sur la face extérieure de cette plaque par des éléments de ressort 6B travaillant à la compression, tels par exemple des rondelles Belleville. Il est donc possible de régler la valeur des efforts de compression, imprimés par le cône de serrage sur la pièce d'extrémité et d'encaisser les variations d'efforts dues aux variations de température.

En dernier lieu, l'embout 5A2 de la trompette 5A vient enserrer le câble à l'extérieur de la plaque d'obturation et il est fixé sur ce câble par une fixation 12 de manière à assurer un contact et une continuité entre l'écran semi-conducteur extérieur du câble et la trompette 5A via son embout 5A2. Cette fixation 12 de type ceinture est réalisé par exemple par une frette disposée sur l'embout ou encore par un ressort à boudin comme représenté.

### Revendications

1. Montage d'extrémité destiné à assurer l'entrée d'un câble électrique haute tension (1) dans une enceinte étanche, dotée d'au moins une embouchure (2) d'entrée de câble qui est fermée par une plaque d'obturation (3) fixée sur elle et percée d'un orifice tronconique (8), qui s'ouvre vers l'intérieur de l'enceinte lorsque la plaque (3) est en place, et à travers lequel passe le câble, l'étanchéité du passage étant assurée par un joint logé dans l'orifice tronconique et entourant le câble à ce niveau, ledit montage étant caractérisé en ce qu'il comporte:

— une pièce d'extrémité (5) fusiforme, servant de joint, qui est traversée axialement par un conduit (9) ménagé pour un passage en force du câble (1) et qui vient s'enficher dans l'orifice (8) à la paroi interne duquel cette pièce d'extrémité (5) s'applique par l'intermédiaire d'une trompette (5A) semi-conductrice dont le pavillon (5A1) a même conicité que ledit orifice qu'il vient fermer de manière étanche et dont l'embout (5A2) vient étroitement enserrer le câble à l'extérieur de l'enceinte au delà de la plaque d'obturation (3) lorsque le câble est en place;

— un cône de serrage (11) qui est traversé axialement par le câble, qui est placé sur le bout (5B2) de la pièce d'extrémité fusiforme opposé à celui comportant la trompette, et qui vient enfoncer cette pièce d'extrémité dans l'orifice par un dispositif de rappel élastique (6) prenant appui sur la plaque d'obturation (3), de manière à assurer simultanément une bonne étanchéité et une bonne continuité électrique.

2. Montage d'extrémité selon la revendication 1, caractérisé en ce que la pièce d'extrémité (5) en matériau isolant élastiquement déformable sous forte contrainte est appliquée contre l'orifice (8) par un cône de serrage (11), en matériau isolant rigide, qui l'entoure et qui est assujetti à la plaque d'obturation (3) par un dispositif de rappel élastique (6) constitué par des vis (6A) dont les têtes, extérieures à la plaque lorsque celle-ci est montée, sont respectivement appuyées sur des ressorts de compression (6B) que traversent leurs tiges et qui sont comprimés entre lesdites têtes de vis et la plaque d'obturation (3) par vissage des vis dans le cône (11).

3. Montage d'extrémité selon la revendication 1, caractérisé en ce que l'embout (5A2) de la trompette (5A) est enserré dans une ceinture de fixation (12) assurant le contact et la continuité de l'écran du câble avec la trompette.

### Patentansprüche

1. Montage eines Endes, das die Einführung eines elektrischen Hochspannungskabels (1) in einen dichten Behälter sicherstellen soll, der mindestens eine Kabeleinführungsmündung (2) aufweist, die von einer Verschlussplatte (3) verschlossen wird, die auf ihr befestigt ist und eine kegelstumpfförmige Öffnung (8) aufweist, die sich ins Innere des Behälters öffnet, wenn die Platte (3) angebracht ist, und durch die das Kabel verläuft, wobei die Dichtheit des Durchgangs durch eine Dichtung sichergestellt wird, die in der kegelstumpfförmigen Öffnung angeordnet ist und das Kabel in dieser Höhe umgibt, dadurch gekennzeichnet, dass

— ein als Dichtung dienendes spindelförmiges Endstück (5) vorgesehen ist, das axial von einem Kanal (9) zum strammen Durchlass des Kabels (1) durchquert wird und das sich in die Öffnung (8) einfügt, an deren Innenwand dieses Endstück (5) über eine halbleitende Trompete (5A) anliegt, deren Trichter (5A1) die gleiche Konusform aufweist wie die Öffnung, die es dicht verschliesst, und deren Mundstück (5A2) das Kabel ausserhalb des Behälters jenseits der Verschlussplatte (3) eng umgibt, wenn das Kabel eingesetzt ist,

— und ein Spannkonus (11) vorgesehen ist, der axial vom Kabel durchquert wird, der sich an dem dem die Trompete tragenden Ende entgegengesetzten Ende (5B2) des spindelförmigen Endstücks befindet und der dieses Endstück in die Öffnung mithilfe einer elastischen Spannvorrichtung (6) drückt, die sich auf der Verschlussplatte (3) abstützt, um zugleich eine gute Dichtheit und eine gute elektrische Kontinuität zu sichern.

2. Montage eines Endes gemäss Anspruch 1, dadurch gekennzeichnet, dass das Endstück (5) aus unter starker Beanspruchung elastisch verformbarem Isoliermaterial durch einen Spannkonus (11) aus starrem Isoliermaterial gegen die Öffnung (8) gedrückt wird, wobei der Spannkonus das Endstück umgibt und gegen die Verschlussplatte (3) durch eine elastische Spannvorrichtung (6) bestehend aus Schrauben (6A) vorgespannt wird, deren im montierten Zustand ausserhalb der Platte liegende Köpfe jeweils auf Kompressionsfedern (6B) drücken, durch die die Schrauben verlaufen und die zwischen den Schraubenköpfen und der Verschlussplatte (3) durch Einschrauben der Schrauben in den Spannkonus (11) komprimiert werden.

3. Montage eines Endes nach Anspruch 1, dadurch gekennzeichnet, dass das Mundstück (5A2) der Trompete (5A) in eine Bandage (12) eingespannt ist, die den Kontakt und die Kontinuität der Kabelabschirmung mit der Trompete sichert.

**Claims**

1. An end mounting conceived to ensure the entry of a high voltage cable (1) through a tight wall comprising at least one cable inlet access (2) closed by an obturation plate (3) which is fixed thereto and which is pierced by a frustroconical opening (8), this opening communicating with the inside of the wall if the plate (3) is mounted, the cable passing through this opening, the tightness of the passage being ensured by a seal located in the frustroconical opening and surrounding the cable at this level, characterited in that it includes:

— a spindle-shaped end piece (5) acting as a seal being axially passed through by a channel (9) arranged to allow the cable (1) to pass therethrough by force, this end piece being inserted into the opening (8), the end piece (5) being applied to the inner wall of the opening (8) through a semiconducting trumpet (5A), the bell (5A1) of which has the same conus angle as said opening and which obturates it in a tight manner, and the ferrule (5A2) of which closely surrounds the cable outside of the wall and of the obturation plate (3), if the cable is mounted,

— a tighthening cone (11) through which the cable passes axially and which is located on the terminal part (5B2) of the spindle-shaped end piece opposite to the trumpet, this tightening cone pushing the end piece into the opening via an elastic spring device (6) which is backed up by the obturation plate (3) such that simultaneously a good seal tightness and a good electrical continuity are ensured.

2. An end mounting according to claim 1, characterized in that the end piece (5) made of a material which can be deformed elastically by high charges, is applied against the opening (8) through a tightening cone (11) made of a rigid insulating material and surrounding the end piece, this tightening cone being pushed against the obturation plate (3), by a resilient spring device (6) constituted by screws (6A), the heads of which are located outside of the plate in the mounted state and are respectively applied to compression springs (6B) which are passed through by their shafts and are compressed between said screw heads and the obturation plate (3) by turning the screws into the cone (11).

3. An end mounting according to claim 1, characterized in that the bell (5A2) of the trumpet (5A) is squeezed in a fixing belt (12) which ensures the contact and the continuity between the shield of the cable and the trumpet.